# EUROPÄISCHE PATENTSCHRIFT

(11) **EP 2 894 132 B1**
(45) Veröffentlichungstag und Bekanntmachung des Hinweises auf die Patenterteilung: **01.02.2017**
(21) Anmeldenummer: 14194657.4
(22) Anmeldetag: 25.11.2014
(51) Int. Cl.: C03C 13/06, C03C 3/112

(54) **Mineralfaserzusammensetzung**
Mineral fibre composition
Composition de fibres minérales

(30) Priorität: 14.01.2014 CH 372014
(43) Veröffentlichungstag der Anmeldung: 15.07.2015
(73) Patentinhaber: Sager AG, 5724 Dürrenäsch (CH)
(72) Erfinder: Greiner-Bär, Gerhard, 98724 Lauscha (DE)
(74) Vertreter: Schneider Feldmann AG Patent- und Markenanwälte

(56) Entgegenhaltungen:
- EP-A1- 1 522 532
- DE-A1- 2 351 105
- US-A- 5 108 957
- US-A1- 2008 191 179

## Beschreibung

Die vorliegende Erfindung betrifft eine Mineralfaserzusammensetzung und daraus herstellbare Mineralfasern, die u. a. als Dämmstoff sowie als Material zum Brandschutz oder Schallschutz anwendbar ist.

Die Verwendung von Mineralfasern oder Glaswolle als Material in unterschiedlicher Formgebung zur Wärmedämmung oder zum Brandschutz ist bekannt.

Es wird wird seit vielen Jahren in der Forschung und Entwicklung intensiv daran gearbeitet, Mineralfasern mit einem umfassenden Eigenschaftsprofil zu entwickeln und zu produzieren.

Eine effiziente und kosteneffektive Schmelze der Gemengekomponenten im Ofen oder der Schmelzwanne und die Herstellung der Fasern aus der Schmelze erfordert, dass die chemische Zusammensetzung eine geeignete Liquidus-Temperatur aufweist und während eines Zerfaserungsverfahrens eine geeignete Viskosität besitzen muss.

Diese Erfordernisse sowie die Probleme der Biobeständigkeit der Fasern beschränken die Wahl der zu schmelzenden chemischen Zusammensetzung erheblich.

Ein entscheidendes Kriterium der Faserherstellung mittels des kombinierten Zieh-Blas-Verfahrens, das in verschiedenen Varianten und Darstellungen auch mit den Bezeichnungen TEL-Verfahren, Rotary-Verfahren, Rotaflex-Verfahren, Nittobo-Verfahren, CAT-Verfahren
genannt, oder auch interne oder innere Zentrifugierung bezeichnet wird, stellt das viskosimetrische Verhalten der chemischen Zusammensetzung dar und dabei insbesondere der Arbeitsbereich der Zusammensetzung, in dem insbesondere eine Zerfaserung der Schmelze stattfinden kann.

Dieser Arbeitsbereich ist definiert durch den Temperaturbereich der Schmelze zwischen einer Viskosität von etwa 104-dPas und der Liquidus-Temperatur.

Dieser Differenzbereich sollte mindestens 100° betragen und insbesondere über 120° liegen.

Auch die biologische Abbaubarkeit der Fasern, nämlich die Fähigkeit, sich in einen physiologischen Milieu schnell aufzulösen, um jegliches potentielles pathogenes Risiko in Verbindung mit einer gegebenenfalls stattfindenden Ansammlung von feinsten Fasern im Organismus vermittels Einatmen zu vermeiden, ist in den letzten Jahren in den Fokus gerückt.

Über die Problematik der Biobeständigkeit und Biopersistenz wird z. B. in einem Artikel von C. Barott u.a. in Environ, Health Perspect. 81 (1989) berichtet. Weitergehende Ausführungen finden sich u. a. bei F. Pott (VDI-Berichte Nr. 853, 1991) oder bei H. Muhle und B. Bellmann (VDI-Berichte Nr. 1417, 1998).

Als Indikator für diese Problematik werden sogenannte In-vitro-Tests herangezogen, wobei die Auflösungsgeschwindigkeit der Fasern in einer Modellflüssigkeit, einer sogenannten Gamble'schen Lösung, im Labor untersucht wird. Diese Gamble'sche Flüssigkeit ist einem biologischen Milieu angepasst.

Für diese Untersuchungen werden sowohl Modellflüssigkeiten mit einen pH-Wert von 7,5 als auch mit einen pH-Wert von 4,5 verwendet. Die Ergebnisse dieser Tests werden als Reduzierung des Faserdurchmessers in ng/Tag angegeben.

Der Hintergrund der Verwendung von zwei verschiedenen pH-Werten bei den In-vitro-Tests wird u. a. im BIA-Report 2 /98 aufgezeigt. Danach sind an der Reinigung der Lungen von Fasern zwei Grundmechanismen beteiligt, nämlich die Auflösung in der nahezu neutralen Lungenflüssigkeit und die Auflösung der Fasern in einer sauren Umgebung bei pH 4,5, die in der Lunge um Fasern herum erzeugt wird, die von Makrophagen umgeben sind.

Es wird angenommen, dass Makrophagen die Entfernung der Fasern aus der Lunge dadurch fördern, dass sie die lokale Auflösung der umgebenden Faserfläche fördern, was zu einer Schwächung und einem Brechen der Fasern führt und so die durchschnittliche Faserlänge vermindert, wodurch die Makrophagen in die Lage versetzt werden, die kürzeren Fasern zu umschlingen und aus der Lunge heraus zu transportieren.

Zahlreiche Lösungen beschreiben Fasern, die eine verbesserte Auflösungsgeschwindigkeit bei In-vitro-Tests ergeben sollen, beispielsweise in der WO 87105007 A1, WO 89112032 A1, EP 0412878 A1, EP 0459897 A1, WO 92109536 A1, WO 93122251 A1, EP 0998432 A1, EP 0994647 A1oder der EP 1032542 A1.

Ein Charakteristikum vieler dieser in den Patentanmeldungen beschriebenen Fasern, von denen behauptet wird, dass sie in In-vitro-Tests eine verbesserte Auflösungsgeschwindigkeit zeigen würden, besteht darin, dass sie entweder nur mit Hilfe der bekannten Kaskaden-Verfahren bzw. Silan-Verfahren herstellbar sind, oder, falls doch mit dem kombinierten Schleuder-Blas-Verfahren, dass auf Grund der erforderlichen hohen Temperaturen bei der zur Zerfaserung erforderlichen Viskosität von log ή = 2,5 Poise mit einer sehr kurzen Lebensdauer der Zerfaserungseinrichtungen gerechnet werden muss.

In der WO 9957073 A1 wird eine Lösung für eine Mineralfaserzusammensetzung dargestellt, bei der sowohl die Forderung nach einer im Körper abbaubaren Faser als auch die Forderung nach einer Zerfaserbarkeit mit dem Schleuder-Blas-Verfahren, hier internes Zentrifugieren genannt, erfüllt sein soll.

Die chemische Zusammensetzung dieser Faser ist dabei mit 38-52% Si02,16-23 % Al203, RO 4-15 % in Form von CaO und/oder MgO, R203 16-25 % in Form von Na20 und/oder K20, 0-10 % B203, 0-3 % P205, 0-3 % Fe203 und 0-2 % Ti02 angegeben.

Ähnliche Rezepturen finden sich in den darauf aufbauenden WO 0017117 A1, WO 0168546 A1, WO 06103375 A1, WO 08003913 A1, als auch in der EP 0708743 A1.

Die Zerfaserung dieser Mineralfaserzusammensetzungen mittels Schleuder-Blas-Verfahren erfordert sehr hohe Temperaturen von ca. 1380°C bei einer Viskosität von log ή = 2,2 Poise.

Für die Zerfaserungseinrichtung liegt dabei die Dauerbelastung bei 1200°C und darüber.

Dafür mussten jedoch eigens neue Metalllegierungen mit einem hohen Anteil an Kobalt entwickelt werden, wie sie z. b. in den US-PS 6068814 und US-PS 6266979, der EP 0968314 A1, der WO 2005052208 A1oder der WO 2009071847 A1 offenbart sind.

Die Standzeit der Zerfaserungseinrichtungen ist dabei trotz dieser neuen Entwicklungen bei den eingesetzten Meta1llegierungen sehr begrenzt und liegt bei einer Einsatzzeit von 3-4 Tagen. Dadurch bewegt sich die Herstellung von Mineralfasern mit derartigen chemischen Zusammensetzungen wirtschaftlich im Grenzbereich.

Aufgrund der teilweise mangelhaften Korrelation von In-vitro-Testergebnissen zu In-vivo- Untersuchungen wird der regulatorische und somit verbindliche Nachweis der gesundheitlichen Unbedenklichkeit der Fasern ausschließlich auf die Versuchsergebnisse aus In-vivo-Tests bezogen (F. Pott).

Die entsprechenden regulatorischen Anforderungen sind z. B. in der EU-Richtlinie 97/69 oder in Deutschland in der Gefahrenverordnung Anhang IV Nr. 22 definiert.

Von den verschiedenen In-vivo-Testverfahren gilt mittlerweile der sogenannte Intrahealth-Test (I.T.-Test) als allgemein akzeptierter Standard, der sich in beiden vorgenannten Regelungen wiederfindet. Dieser Test ist in einem Protokoll der EU (Methods for the Determination of the Hazardous Properties for Human Health of Man made Mineral Fibres-MMMF-of the European Commission Joint Research Center, Institute for Health and Consumer

Protection, Unit Toxicology and Chemical Substances, European Chemicals Bureau, edited by David M. Berbstein und Juan m. Riego Sintes, April 1999, Protokoll 1.2 Biopersistence of Fibres. Intertracheal Installation (ECB/ TM/27 rev.7)) definiert.

Als Ergebnis eines solchen I.T.-Tests resultiert eine für die Mineralfaserauflösung charakteristische Halbwertszeit, die in Tagen angegeben wird.

Die in Deutschland geltenden Anforderungen an den Nachweis der gesundheitlichen Unbedenklichkeit, welche sich auf den I.T.-Test beziehen, greifen auf dieses Protokoll mit leichten Abweichungen zurück, welche in der TRGS 905,2.3.(4) beschrieben sind.

Der Erfindung liegen ausgehend vom eingangs beschriebenen Stand der Technik die Aufgabe zugrunde, eine Mineralfaserzusammensetzung mit einer chemischen Zusammensetzung von Mineralfasern zu gestalten, bei der eine Faserschmelze mittels des kombinierten Schleuder-Blas-Verfahrens wirtschaftlich zerfaserbar ist, ohne dabei die Möglichkeit einer anderen Zerfaserungstechnologie auszuschließen.

Dies unter Beachtung dessen, dass die aus der Schmelze hergestellten Fasern und Produkte, die als technische Isolierungsmaterialien eine Hochtemperaturbeständigkeit von 1000°C nach der DIN 4102, Teil 17 ermöglichen und nach der ISO 8142, der DIN EN 14706 und der DIN EN 14707 eine Anwendungstemperatur > 600°C aufweisen. Zudem sollen sie über ein hohes Mass an physiologischer Abbaubarkeit verfügen.

Die Lösung dieser Aufgabe erfolgen durch die Merkmale des Patentanspruchs 1, gemäss dem die erfindungsgemässe Mineralfaserzusammensetzung folgende chemische Zusammensetzung, in Masse-% aufweist:
- Si0₂: 37-44%
- Al₂0₃: 16-24%
- CaO: 8-14%
- MgO: 2-7 %
- Na₂0: 5-12%
- K₂0: 2-7%
- Fe₂0₃: 3-8%
- F₂: 1-5%
- ZnO: 0,4-3%
- TiO₂: 0,1-3 %.

In bevorzugter Ausführung kann die erfindungsgemässe Mineralfaserzusammensetzung folgende chemische Zusammensetzung, in Masse-% aufweisen und dabei auch zusätzliche Komponenten enthalten:
- Si0₂: 39-42%
- Al₂0₃: 19-22%
- CaO: 10-12%
- MgO: 3-5%
- Na₂0: 8-11%
- K₂0: 3-6%
- Fe₂0₃: 4-6%
- F₂: 2-4%
- ZnO: 0,4-2%
- Ti0₂: 0,5-1%

- S0₃: 0, 1 - 0,5 %, bevorzugt 0,2-0,4%
- MnO: 0,1 - 1 %, bevorzugt 0,1-0,4%
- BaO: ≤ 0,2%, bevorzugt ≤ 0,1 %.

Die Entwicklung einer solchen chemischen Zusammensetzung gestattet es, Vorteile zu schaffen, insbesondere unter Nutzung der mehrfach komplexen Zusammenhänge, die bei der Auswahl ihrer spezifischen Bestandteile wirken.

Es hat sich im Rahmen der Forschung und Entwicklung bereits gezeigt, dass es teilweise möglich ist, Mineralfasern zu fertigen, die die modernen Anforderungen erfüllen können. Dabei ist aber festzuhalten, dass die bislang vorgestellten Lösungen, z. B. gemäss EP 0790962 A1 nur für das Kaskadenverfahren und die EP 0596088 A1 für das Silanverfahren, nicht allgemeingültig sind.

Sie stellen vielmehr auf nur eine bestimmte Prozesstechnik ab und sind nicht auf einen anderen Schmelz- und Zerfaserungsprozess, insbesondere das kombinierte Schleuder-Blas-Verfahren übertragbar.

Im Stand der Technik hat es daher nicht an Versuchen gefehlt, durch Veränderung der chemischen Zusammensetzungen von Mineralfasern mit multifaktoriellen Gemischen der Rohstoffe zufriedenstellende Lösungen zu schaffen, die als hochtemperaturbeständig zu bezeichnen sind, zugleich biologisch abbaubar sind und die mittels des kombinierten Schleuder-Blas-Verfahrens unter günstigen wirtschaftlichen Bedingungen als qualitativ hochwertige Fasern hergestellt werden können.

Bis jetzt ist es aber nicht gelungen, alle diese Forderungen zufriedenstellend mittels einer Mineralfaserzusammensetzung prinzipiell zu lösen.

Die erfindungsgemäße Mineralfaserzusammensetzung stellt eine chemische Zusammensetzung dar, die in der "Grauzone" zwischen bisherigen chemischen Standard-Zusammensetzungen von Steinfasern und Glasfasern angesiedelt ist, wobei die daraus erzeugten Fasern die jeweiligen spezifischen Vorteile von Steinfasern und Glasfasern in sich aufnehmen und ausweisen.

Wie bei Silikatgläsern üblich, ist in der erfindungsgemäßen chemischen Zusammensetzung Si0₂ der primäre glasbildende Bestandteil. In Verbindung mit allen anderen erfindungsgemäßen Bestandteilen dieser Zusammensetzung hat sich gezeigt, dass ein optimale Anteil an Siliziumdioxid in den Bereichen 37-44 Masse-% und ins- besondere zwischen 39-42 Masse-% gegeben ist.

Die Einführung von Al₂0₃ bewirkt eine Schliessung von Trennstellen im Glasgefüge, was sich in einer Erhöhung der Viskosität bei allen Temperaturen bemerkbar macht. Es konnte festgestellt werden, dass die Zuordnung eines erhöhten Aluminiumoxidanteiles von 16 bis 24 Masse-%, bevorzugt mehr als 18 Masse-% und/oder bevorzugt weniger als 23 Masse-%, insbesondere weniger als 22 Masse-%, bei einer Summe der Bestandteile Siliziumdioxid und Aluminiumoxid zwischen 56 und 65 Masse-%, bevorzugt mehr als 58 Masse-% und/oder bevorzugt weniger als 64 Masse-%, insbesondere weniger als 63 Masse-%, im Einklang mit den anderen erfindungsgemäßen Bestandteilen, die Herstellung von Mineralfaserzusammensetzungen ermöglicht, welche die bemerkenswerten Eigenschaften besitzen. D.h., dass sie in einem genügend breiten Temperaturbereich zerfaserbar sind und den hergestellten Fasern eine biolösliche Beschaffenheit verleihen.

Durch den erfindungsgemäßen Anteil an Aluminiumoxid wird die gewünschte Hochtemperaturbeständigkeit und Anwendungsgrenztemperatur der erfindungsgemässen Mineralfasern gewährleistet.

Bezüglich des Gehalts an Eisenoxiden ist es gemäß der vorgenannten Ausführungen vorteilhaft, einen Gehalt von wenigstens 4 Masse-% oder gar von wenigstens 5 Masse-%, insbesondere zwischen 5 und 8 Masse-% vorzusehen, um zum einen die Hochtemperaturbeständigkeit der Fasern bei gleichzeitiger positiver Auswirkung auf die Biolöslichkeit der Fasern zu steuern und zum anderen die Metallteile der Zerfaserungseirichtungen vor Korrosion zu schützen.

Die in Bezug auf die Anteilsmengen von Siliziumdioxid, Aluminiumoxid und Eisenoxid dargestellten Erkenntnisse stehen im Einklang mit den erforderlichen Anteilen an Alkalieoxiden (R₂O) und Erdalkalieoxiden (RO) in der erfindungsgemässen Mineralfaserzusammensetzung.

Der Gehalt an alkalischen Oxiden R₂0, d.h., im Wesentlichen Na₂0 und K₂0 beträgt vorzugsweise wenigstens 11 Masse-% und ist insbesondere in einem Bereich zwischen etwa 11 bis 14 Masse-% gehalten.

Der bevorzugte Na₂0-Anteil in der erfindungsgemässen Zusammensetzung beträgt mindestens 7 Masse-%, insbesondere zwischen 7 und 9 Masse-%, während der Anteil an K₂0 mindestens 2 Masse-% beträgt, insbesondere zwischen 4 und 5 Masse-%.

Bei den Alkalioxiden liegt üblicherweise ein deutlich höherer Gehalt an Na₂0 als an K₂0 vor.

K₂0 kann somit bei einem gegebenen Gesamtanteil an Alkalioxiden in einem sehr geringen Gehaltsanteil vorliegen. Dennoch ist es im Rahmen der Erfindung möglich, auch einen höheren K₂0-Anteil z.B. in der Größenordnung von 6 bis 7 Masse-% vorzusehen, was beispielsweise mehr als die Hälfte der Gesamtsumme der Alkalioxide in der Zusammensetzung darstellen kann.

Letztendlich bestimmt sich das Verhältnis von Na₂0 und K₂0 in der erfindungsgemäßen Zusammensetzung durch den Einsatz kostengünstiger Mineralien als Rohstoffträger.

Der bevorzugte Anteil an CaO an der erfindungsgemäßen Zusammensetzung liegt vorteilhaft zwischen 8 und 14 Masse %. Parallel dazu ist der bevorzugte Anteil an MgO zwischen 2 und 7 Masse-%, insbesondere aber zwischen 3 und 6 Masse-% gewählt.

Es ist üblich, einen CaO-Gehalt zu wählen, der bei einem gegebenen Gesamtgehalt an Erdalkalieoxiden höher als derjenige an MgO ist, insbesondere aufgrund der Kosten der Ausgangsmaterialien.

Aber es sprechen auch chemisch-physikalische Gründe dafür, indem so auf das viskosimetrische Verhalten der Gesamtzusammensetzung und auf das Kristallisationsverhalten ein erheblicher Einfluss genommen werden kann.

Bei der Einführung von CaO wird bei hohen Temperaturen die Viskosität erniedrigt, bei tiefen Temperaturen dagegen erhöht. Dies führt zu einer steileren Temperatur-Viskositäts-Kurve, das Glas wird kürzer. Diese Tatsache hat sowohl für die Zerfaserung der Schmelze, als auch für die Eigenschaften der entstehenden Fasern erheblich positive Auswirkungen.

Neben CaO ist das MgO als Glasoxid von großer technischer Bedeutung. Magnesiumoxid ist wie Calziumoxid ein typischer Netzwerkwandler und Glasstabilisator.

MgO verbessert die Kristallisationsfestigkeit und verbessert die Zerfaserungseigenschaften derart, dass in der vorliegenden erfindungsgemässen Zusammensetzung ausgesprochene erwünschte Minima der Viskosität vorliegen.

Neben den bereits beschriebenen Oxiden beinhaltet die erfindungsgemäße chemische Zusammensetzung auch einen Anteil an Ti0₂ in einem Bereich von 0,1-3 Masse-%, vorteilhaft von 0,5 bis 1,0 Masse-%.

Das Titandioxid führt ebenso wie das bereits beschriebene Calziumoxid zu einer wesentlichen Erniedrigung der Hochtemperaturviskosität und einer Zunahme der Niedertemperaturviskosität und zu den damit verbundenen Vorteilen. Die wesentlichen Vorteile und Neuerungen in Bezug auf die erfindungsgemässe chemischen Zusammensetzung werden durch den kombinierten Einsatz von Zinkoxid und Fluor erreicht, die damit beide im Verbund zu unabdingbaren Bestandteilen der erfindungsgemässen Zusammensetzung werden.

Der Einbau von ZnO in das durch die anderen erfindungsgemässen Bestandteile vorgegebene Gefüge bewirkt im Zusammenspiel mit den erfindungsgemässen Anteilen von

CaO und Ti0₂ eine starke Herabsetzung der Hochtemperaturviskosität und eine Zunahme der Viskosität in niedrigen Temperaturbereichen. Zusätzlich verbessert der Einsatz von Zinkoxid das Einschmelzverhalten des Gemenges erheblich.

Die erfindungsgemässe chemische Zusammensetzung besitzt vorzugsweise einen Gehalt an ZnO von wenigstens 0,4 Masse-% oder wenigstens 1,0 Masse-% und insbesondere von 0,4 bis 2,0 Masse %.

Dieser relativ geringe Gehalt wirkt sich im Zusammenspiel mit den anderen erfindungsgemässen Bestandteilen vorteilhaft auf die biologische Abbaubarkeit aus, ohne zu wirtschaftlichen Nachteilen zu führen.

Die für das Schleuder-Blas-Verfahren notwendige ZerfaserungsViskosität wird bei tieferen Temperaturen erreicht. Dies ist ein entscheidendes Kriterium für die Standzeit und Lebensdauer der Zerfaserungseinrichtung und damit ein wesentlicher Aspekt für eine kostengünstige wirtschaftliche Herstellung der Mineralfasern.

Zur Erreichung der Ziele der Erfindung nehmen die erfindungsgemäss eingesetzten Fluoride eine besondere Stellung ein.

Bei der Erschmelzung des Gemenges ruft die Gegenwart von Fluor bereits bei tiefen Temperaturen das Auftreten einer flüssigen Phase hervor und die Geschwindigkeit der Silikatbildung nimmt stark zu. Durch das Fluor wird die Temperatur, bei der die Silikatbildung beendet ist, erheblich gesenkt.

Weiterhin geht die Glasbildung infolge Erhöhung der Wärmeleitfahigkeit des Gemenges durch die Fluoride schneller vor sich. Bei hohen Temperaturen werden durch die entstehenden Fluordämpfe die Oberflächen der Kristallgitter zerstört und erhöhen wesentlich die Reaktionsfähigkeit des Gemenges.

Letztlich wird die Verarbeitungsfahigkeit des flüssigen Glases bei der Zerfaserung entscheidend verbessert.

Der bevorzugte Anteil an Fluor bei der erfindungsgemäßen Zusammensetzung liegt vorteilhaft zwischen 1 und 5 Masse-% und vorzugsweise zwischen 2 und 4 Masse-%.

Der Einsatz der Fluoride im Gemenge bewirkt einerseits eine sehr günstige Kostenstruktur durch eine erhebliche Einsparung an Energie und zum anderen eine schnellere Erreichung der notwendigen Zerfaserungsviskosität bei tieferen Temperaturen. Nach der Lehre der DEOS 2351105 ist eine fluorfreie Glaszusammensetzung mit hohen Kosten bei Herstellung und Verwendung der Fasern verbunden. Um dennoch Umweltschutzforderungen erfüllen zu können, soll Flour offenbarungsgemäss ausgeschieden und vollständig durch Bariumoxid ersetzt werden.

Bei den bekannten Glaszusammensetzungen, die Fluor enthalten, entweicht bei der Schmelze ein Großteil des Fluors als SiF₂, und verliert dadurch einen wesentlichen Teil seiner Wirkung im Glas.

Überraschenderweise hat sich in den durchgeführten Versuchen gezeigt, dass bei der erfindungsgemässen chemischen Zusammensetzung auch noch sehr hoher Anteil an der ins Gemenge eingebrachten Menge an Fluor im geschmolzenen Glas vorliegt.

Das Vorhandensein eines Großteils der in das Glas eingebrachten Menge an Fluor im geschmolzenen Glas hängt direkt mit den vorhandenen Bindungsverhältnissen der Glasstruktur in der erfindungsgemäßen Zusammensetzung zusammen, wobei ein Großteil der F₂-Ionen im Glasgefüge verbleibt.

Dieses hat bei einer möglichen 2-Stufen-Verarbeitung des Glases, also einer Verarbeitung mit Abkühlung des Glases und einer nachfolgenden Wiedererhitzung erhebliche positive Folgen, da dann noch genügend Fluor im Glas vorhanden ist, um die bereits geschilderten Viskositätsvorteile erneut voll auszunutzen.

Der in der erfindungsgemässen chemischen Zusammensetzung vorgesehene Anteil an Manganoxid spielt in ähnlicher Weise wie das Vorhandensein von Eisenoxid für die Standzeit der Zerfaserungseinrichtung beim Schleuder-Blas-Verfahren eine nicht unbedeutende Rolle. Im Zusammenspiel mit Fe₂0₃ wirkt sich der MnO-Anteil positiv auf eine geringere Korrosion der Rotationsteile der Zerfaserungseinrichtung aus.

Der prozentuale Anteil an MnO kann dabei bis zu 1 Masse-% betragen, vorteilhafterweise aber zwischen 0,1 bis 0,4-Masse % liegen.

Daneben kann sich in der erfindungsgemässen Zusammensetzung noch S0₃ befinden, welches sich in der Schmelze der Rohstoffe bildet bzw. in den Rohstoffen bereits vorhanden ist. Dies hat aber, wie auch andere Spurenelemente bzw. Verunreinigungen wie z. B. BaO und Cr₂0₃, die durch die Rohstoffe in geringsten Mengen in die Schmelze gelangen, weder einen Einfluss bei der Schmelzung der Rohstoffe, noch auf die Eigenschaften der Mineralfasern.

Vor allem wegen einer guten Einschmelzbarkeit des Gemenges, doch ebenso aus Kostengründen wird als Hauptträger der einzelnen Elementoxide auf in der Natur vorkommende Mineralien zurückgegriffen, die in ihrer Struktur die zum Einsatz kommenden Elemente teilweise oder in ihrer Gänze beinhalten, so dass ausser dem erfindungsgemässen Anteil an Zinkoxid und geringen Anteilen an Läuterungsmitteln keine auf chemischen Wege hergestellten Rohstoffe zum Einsatz kommen müssen.

Auf diese Art und Weise können die aus der erfindungsgemässen Zusammensetzung hergestellten Fasern gleich in zweierlei Hinsicht kostengünstig produziert werden.

Zum einen werden bei der Schmelze des erfindungsgemässen Gemenges durch Mischung verschiedener Mineralien günstige Schmelztemperaturen erreicht, die durch einen Einsatzanteil von Altglasscherben noch verstärkt werden können.

Die schmelzfördernde Wirkung der Altglasscherben beruht darauf, dass für ihre Einschmelzung keine Wärmeenergie für den Abbau von Kristallgittern benötigt wird. Die Glasscherben, die bevorzugt zu einer Grösse entsprechend der Korngrösse der anderen Komponenten vermahlen werden, lockern das Gemenge auf und schmelzen viel leichter ein als reines Gemenge.

Eine wichtige Rolle bei Einsatz der Glasscherben als Schmelzbeschleuniger spielt auch ferner ihr Gasgehalt.

In der erfindungsgemässen Zusammensetzung können bis zu 50 Masse-% an Altglasscherben eingesetzt werden, vorzugsweise aber mit einem Anteil von 15 bis 25 Masse-%.

Durch das nahezu vollständige Vorhandensein der Elementoxide in fast allen zum Einsatz kommenden Rohstoffen ist zum anderen eine homogene Schmelzung bei einer relativ niedrigen Schmelz temperatur im Vergleich zu einer Gemengeschmelze, die aus Rohstoffen besteht, deren Elementoxide einzeln oder vorwiegend einzeln vorliegen.

Die aus der erfindungsgemässen chemischen Zusammensetzung hergestellten Fasern besitzen ein gutes Mass an biologischer Abbaubarkeit, wobei das In-vitro-Verfahren zur Bestimmung der biologischen Biobeständigkeit einen neutralen, leicht basischen, oder einen pH-Wert im sauren Bereich impliziert.

Die erfindungsgemässen Mineralfasern besitzen allgemein eine Auflösungsgeschwindigkeit von wenigstens 30, vorzugsweise wenigstens 40 bis 50 ng/cm pro bei einen pH-Wert von 4,5, und von wenigstens 30, vorzugsweise wenigstens 40 bis 50 ng/cm2 pro Stunde gemessen bei einen pH-Wert von 7,5.

Weiterhin weisen die mit der erfindungsgemässen Zusammensetzung hergestellten Fasern im Intratrachealtest innerhalb des In-vivo-Verfahrens eine Halbwertszeit <40 Tagen auf. Damit werden die allgemein akzeptierten Konventionen der Gütegemeinschaft Mineralwooie e.V. (GGM) und des European Certification Boards (EUCEB) erfüllt.

Es hat sich gezeigt, dass neben der biologischen Abbaubarkeit der erfindungsgemäss hergestellten Mineralfasern die Forderungen nach einer hohen Temperaturbeständigkeit von 1000°C nach DIN 4102, Teil 17, erfüllt sind. Ferner liegt die Anwendungs- grenztemperatur über 600°C und erfüllt die Bestimmungen der früheren AGI Q 132 und der ISO 8142, der DIN EN 14706 und der DIN EN 14707 für den Industriesektor.

Die technischen Anforderungen an die Zerfaserung mittels des kombinierten Schleuder-Blas-Verfahrens können erfüllt werden. Dies ist vor allem darauf zurückzuführen, dass mittels der erfindungsgemässen spezifischen chemischen Zusammensetzung im Bereich der Viskositätswerte zwischen log 10² und log 10⁴ ein steiler Anstieg der Temperatur-Viskositätskurve gegeben ist, wobei für diese Viskositäten überraschend relativ niedrige Temperaturen zu verzeichnen sind.

Aus den relativ niedrigen Temperaturen resultierend, wird bei den erforderlichen Zerfaserungsviskositäten die Lebensdauer der Rotationsteile der Zerfaserungseinrichtung wesentlich erhöht und somit ist eine hohe Wirtschaftlichkeit gegeben. Resultierend aus der erfindungsgemässen chemischen Zusammensetzung ergibt sich eine Liquidustemperatur die mehr als 120° unter der Zerfaserungsviskosität liegt.

Die erfindungsgemässe Mineralfaserzusammensetzung bzw. die hergestellten Mineralfasern sind zum Beispiel als Dämmwerkstoff für den Wärme-, Kälte-, Schall- und Brandschutz verwendbar. So im Hochbau, im Industriebau, wie auch im Fahrzeugbau oder Schiffbau. Die Mineralfasern können zu Formkörper (bevorzugt elastisch) in unterschiedlicher Formgebung verarbeitet werden, insbesondere in Form von Filzen, Matten, Rollen, Platten, Schalen, Streifen, Bahnen oder auch in Form loser Wolle verwendet werden.

Weitere Vorteile und Merkmale der Erfindung ergeben sich anhand des nachfolgenden Ausführungsbeispieles.

Aus den Rohstoffen Nephelin, Kaolin, Bauxit, Dolomit, Altglas, Flussspat, Zinkoxid, Natriumsulfat und Kaliumnitrat wurde eine geeignete Ausgangsmischung (Gemenge) hergestellt und dieses Gemenge in einer elektrisch beheizten Schmelzwanne bei ca.
1420 ° C erschmolzen.

Die ermittelten Werte der Temperatur-Viskositäts-Kurve des Glases betrugen dabei wie folgt:

| Log ή (Pas) | Temperatur (°C) |
|---|---|
| 2,0 | 1382 |
| 2,5 | 1282 |
| 3.0 | 1204 |
| 3,5 | 1144 |

Ein schmelzflüssiger Glasstrahl mit einer Temperatur von 1330 °C wurde dem rotierenden Teil (Schleuder) einer kombinierten Schleuder-Blas-Anlage zugeführt und durch den Schleuderkorb, der eine Temperatur von 1160 bis 1170 °C aufwies, zu Mineralfasem mit einem mittleren Durchmesser von 7,6 µm und einer durchschnittlichen Faserlänge von 9,7 mm zerfasert. Der Shot-Anteil der Mineralfasern betrug dabei 1,8 Masse-%.

Die Analyse der chemischen Zusammensetzung ergab (in Masse-%) :
- Si0₂: 40.4%
- Al₂0₃: 22,6%
- CaO: 11,4%
- MgO: 4.1%
- Na₂0: 8,2%
- K₂0: 4,0%
- Fe₂0₃: 5,1%
- F₂: 2,2%
- ZnO: 1,0%
- Ti0₂: 0,8%
- S0₃: 0,15%
- MnO: 0.12%

Zudem wurden noch Anteile von BaO und Cr₂0₃, jeweils weniger als 0,07 Masse-% analysiert, die als Verunreinigungen der Einsatzrohstoffe in das Ausgangsgemenge gelangten, aber keinerlei Einfluss auf die chemischen und physikalischen Eigenschaften des erfindungsgemässen Glases und der daraus hergestellten Dämmstofffasern ausüben.

Die produzierten Fasen wurden mittels einer Gamble'schen Lösung bei einen pH-Wert von 4,5 und einen pH-Wert von 7,5 bezüglich ihrer biologischen Abbaubarkeit getestet,
wobei im ersten Fall die Auflösungsgeschwindigkeit bei 42 ng/cm2 pro Stunde und bei einen pH-Wert von 7,5 bei 53 ng/cm2 pro Stunde lag.

Nach der von M. Guldberg (Development of biosoluble stone and glass wool fibres, Jownal of The Danish Ceramic Society 6-I-2004) entwickelten empirischen Kanzerogenitätsformel Al₂0₃ / Al₂0₃ + Si0₂ > 0,35 beträgt der Faktor für das Ausführungsbeispiel der erfindungsgemässen chemischen Zusammensetzung 0,359.

Mittels des ln-vivo-Intratrachealtest erbrachten die Testungen eine Halbwertszeit von weniger als 40 Tagen, was bedeutet, dass der Nachweis der gesundheitlichen Unbedenklichkeit für die erfindungsgemässe Zusammensetzung erbracht wurde.

Die vorstehende chemische Zusammensetzung erfüllt darüber hinaus die Anforderungen an die Temperaturbeständigkeit > 1000 °C nach der DIN 4102, Teil 17, wobei die Anwendungsgrenztemperatur gemäß Bestimmung nach der ISO 8142, der DIN EN 14706 und der DIN EN 14707 über 600 °C liegt.

Das Zusammenspiel aller Merkmale der erfindungsgemässen chemischen Zusammensetzung hat eine hohe Wirtschaftlichkeit sowohl bei der Schmelzung als auch bei der Zerfaserung zur Folge.

Die Schmelzung der Rohstoffe kann schneller und bei tieferen Temperaturen als gewöhnlich erfolgen. Die Zerfaserung kann ebenfalls bei niedrigeren Temperaturen gegenüber dem Stand der Technik erfolgen, was zu einer wesentlich höheren Standzeit und Lebensdauer der Zerfaserungseinrichtung von bis zu 14 Tagen führt.

## Patentansprüche

1. Mineralfaserzusammensetzung, die zerfaserbar und geeignet ist, sich in einen physiologischen Milieu aufzulösen, **dadurch gekennzeichnet, dass** sie die nachstehend aufgeführte chemische Zusammensetzung gemäß den folgenden prozentualen Massenbestandteilen aufweist :
Si0₂ 37-44%
Al₂0₃ 16-24%
CaO 8-14%
MgO 2-7%
Na₂0 5-12%
K₂0 2-7%
Fe₂0₃ 3-8%
ZnO 0,4-3%
F₂ 1-5%
Ti0₂ 0, 1-3%.

2. Mineralfaserzusammensetzung nach Anspruch 1, **dadurch gekennzeichnet, dass** sie mit einem Schleuder-Blas-verfahren zerfaserbar ist.

3. Mineralfaserzusammensetzung nach Anspruch 1 oder 2, **dadurch gekennzeichnet, dass** sie zusätzlich noch wenigstens eine der folgenden Komponenten, angegeben in Masse-% enthält:
MnO 0,1- 1%
S0₃ 0,1-0,5%
BaO 0- 0,2%
Cr₂0₃ 0- 0,1%.

4. Mineralfaserzusammensetzung nach einem der Ansprüche 1 bis 3, **gekennzeichnet durch** folgende chemische Zusammensetzung in Masse-% :
Si0₂ 39-42%
Al₂0₃ 19-22%
CaO 10-12%
MgO 3-5%
Na₂0 8-11%
K₂0 3-6%
Fe₂0₃ 4-6%
ZnO 0,4-2%
F₂ 2-4%
Ti0₂ 0,5-1%
MnO 0,1-0,4%
S0₃ 0,2-0,4%
BaO 0-0,1%

5. Minealfaserzusammensetzung nach einem der Ansprüche 1 bis 4, **dadurch gekennzeichnet, dass** der summierte Anteil an Si0₂ und Al₂0₃ zwischen 56 und 65 Masse-% beträgt.

6. Mineralfaserzusammensetzung nach einem der Ansprüche 1 bis 5, **dadurch gekennzeichnet, dass** der Alkalioxidanteil R₂0, insbesondere Na₂0 und K₂0 zwischen 11 und 14 Masse-% beträgt.

7. Mineralfaserzusammensetzung nach einem der Ansprüche 1 bis 6, **dadurch gekennzeichnet, dass** der Anteil an Erdalkalioxiden RO, d.h. CaO und MgO 12 bis 19 Masse-% beträgt.

8. Mineralfaserzusammensetzung nach einem der Ansprüche 1 bis 7, **dadurch gekennzeichnet, dass** der Anteil an ZnO und F₂ zwischen 2 und 7 Masse-% liegt.

9. Mineralfaserzusammensetzung nach einem der Ansprüche 1 bis 7, **gekennzeichnet dadurch, dass** die Summe der Anteile an Fe₂0₃, MgO und Ti0₂ höchstens 9 Masse-% beträgt.

10. Mineralfaserzusammensetzung nach einem der Ansprüche 1 bis 9, **dadurch gekennzeichnet, dass** die daraus erzeugten Mineralfasern eine Auflösungsrate von mindestens 30 ng/cm² pro Stunde bei einen pH-Wert von 4,5 aufweisen.

11. Mineralfaserzusammensetzung nach einem der Ansprüche 1 bis 9, **dadurch gekennzeichnet, dass** die daraus erzeugten Mineralfasern eine Lösungsgeschwindigkeit von mindestens 30 ng/cm² pro Stunde bei einen pH-Wert von 7,5 aufweisen.

12. Mineralfaserzusammensetzung nach einem der Ansprüche 1 bis 9, **dadurch gekennzeichnet, dass** der Quotient aus Al₂0₃ *I* Al₂0₃ + Si0₂ grösser 0,35 ist.

13. Mineralfaserzusammensetzung nach einem der Ansprüche 1 bis 9, **dadurch gekennzeichnet, dass** die erzeugten Mineralfasern eine Halbwertzeit von weniger als 40 Tagen im In-vivo- Intratrachealtest aufweisen.

14. Mineralfaserzusammensetzung nach einem der Ansprüche 1 bis 13, **dadurch gekennzeichnet, dass** die Temperaturdifferenz zwischen der Viskosität der Schmelze bei 10² d Pas und der Liquidustemperatur mindestens 100° und vorzugsweise über 120° beträgt.

15. Mineralfaserzusammensetzung nach einem der Ansprüche 1 bis 14, **dadurch gekennzeichnet, dass** die Mineralfasern eine Temperaturbeständigkeit nach DIN 4102, Teil 17 von mindestens 1000 °C aufweisen.

16. Mineralfaserzusammensetzung nach einem der vorhergehenden Ansprüche, **dadurch gekennzeichnet, dass** die Anwendungsgrenztemperatur nach ISO 8142, DIN EN 14706 und DIN EN 14707 mindestens 600 °C beträgt.

17. Mineralfaserzusammensetzung nach einem der vorhergehenden Ansprüche, **dadurch gekennzeichnet, dass** mindestens 95 Masse-% der Rohstoffe für die Fasern aus natürlich vorkommenden Rohmaterialien sowie Recyclingmaterialien bestehen.

18. Mineralfaserzusammensetzung nach einem der vorhergehenden Ansprüche, **gekennzeichnet durch** die nachfolgend aufgeführten chemischen Bestandteile in Masse-% :
Si0₂ 41-42 %
Al₂0₃ 21-22 %
CaO 11-12 %
MgO 4-5 %
Na₂0 8-9 %
K₂0 4-5 %
Fe₂0₃ 5-6 %
ZnO 0,5-1 %
F₂ 1-2 %
Ti0₂ 0,5-1 %
S0₃ 0,1-0,2 %
MnO 0-0,2 %
BaO 0-0,1 %
Cr₂0₃ 0-0,1 %.

## Claims

1. A mineral fibre composition which can be defibred and is designed to dissolve in a physiological medium, **characterised in that** it contains the chemical composition listed below according to the following mass constituent percentages:
SiO₂ 37-44 %
Al₂0₃ 16-24 %
CaO 8-14 %
MgO 2-7 %
Na₂0 5-12 %
K₂0 2-7 %
Fe₂0₃ 3-8 %
ZnO 0.4-3 %
F₂ 1-5 %
Ti0₂ 0.1-3 %.

2. The mineral fibre composition according to claim 1, **characterised in that** it can be defibred in a blow spinning process.

3. The mineral fibre composition according to claim 1 or 2, **characterised in that** it also contains at least one of the following components, expressed in % by mass:
MnO 0.1-1 %
S0₃ 0.1-0.5 %
BaO 0-0.2 %
Cr₂O₃ 0-0.1 %.

4. The mineral fibre composition according to any one of claims 1 to 3, **characterised by** the following chemical composition in % by mass:
Si0₂ 39-42 %
Al₂0₃ 19-22 %
CaO 10-12 %
MgO 3-5 %
Na₂0 8-11 %
K₂0 3-6 %
Fe₂0₃ 4-6 %
ZnO 0.4-2 %
F₂ 2-4 %
TiO₂ 0.5-1 %
MnO 0.1-0.4 %
S0₃ 0.2-0.4 %
BaO 0-0.1 %

5. The mineral fibre composition according to any one of claims 1 to 4, **characterised in that** the aggregate percentage of Si0₂ and Al₂0₃ mass % is between 56 to 65 % by mass.

6. The mineral fibre composition according to any one of claims 1 to 5, **characterised in that** the percentage of alkaline oxide R₂O, particularly Na₂0 and K₂0, is between 11 and 14 % by mass.

7. The mineral fibre composition according to any one of claims 1 to 6, **characterised in that** the percentage of alkaline earth oxides RO, that is to say CaO and MgO is between 12 and 19 % by mass.

8. The mineral fibre composition according to any one of claims 1 to 7, **characterised in that** the percentage of Zn0₂ and F₂ is between 2 and 7 % by mass.

9. The mineral fibre composition according to any one of claims 1 to 7, **characterised in that** the total of the percentages of Fe₂O₃, MgO and Ti0₂ is at most 9 % by mass.

10. The mineral fibre composition according to any one of claims 1 to 9, **characterised in that** the mineral fibres produced therefrom have a dissolution rate of at least 30 ng/cm² per hour at a pH of 4.5.

11. The mineral fibre composition according to any one of claims 1 to 9, **characterised in that** the mineral fibres produced therefrom have a dissolution rate of at least 30 ng/cm² per hour at a pH of 7.5.

12. The mineral fibre composition according to any one of claims 1 to 9, **characterised in that** the quotient of Al₂O₃ *I* Al₂O₃ + SiO₂ is greater than 0.35.

13. The mineral fibre composition according to any one of claims 1 to 9, **characterised in that** the mineral fibres produced have a half-life of less than 40 days in the *in vivo* intratracheal test.

14. The mineral fibre composition according to any one of claims 1 to 13, **characterised in that** the temperature difference between the viscosity of the melt at 10² d Pas and the liquidus temperature is at least 100° and preferably more than 120°.

15. The mineral fibre composition according to any one of claims 1 to 14, **characterised in that** the mineral fibres have a thermal resistance according to DIN 4102 Part 17 of at least 1000 °C.

16. The mineral fibre composition according to any one of the preceding claims, **characterised in that** the application limit temperature according to ISO 8142, DIN EN 14706 and DIN EN 14707 is at least 600 °C.

17. The mineral fibre composition according to any one of the preceding claims, **characterised in that** at least 95 % by mass of the raw materials for the fibres consist of naturally occurring raw materials and recycled materials.

18. The mineral fibre composition according to any one of the preceding claims, **characterised by** the chemical constituents in the percentages by mass listed in the following:
Si0₂ 41-42 %
Al₂0₃ 21-22 %
CaO 11-12 %
MgO 4-5 %
Na₂0 8-9 %
K₂0 4-5 %
Fe₂0₃ 5-6 %
ZnO 0.5-1 %
F₂ 1-2 %
TiO₂ 0.5-1 %
SO₃ 0.1-0.2 %
MnO 0-0.2 %
BaO 0-0.1 %
Cr₂O₃ 0-0.1 %.

## Revendications

1. Composition de fibres minérales qui est effilochable et apte à se dissoudre dans un milieu physiologique, **caractérisée en ce qu'**elle présente la composition chimique indiquée ci-après selon les composants suivants de masse en pourcentage :
SiO₂ 37-44 %
Al₂O₃ 16-24 %
CaO 8-14 %
MgO 2-7 %
Na₂0 5-12 %
K₂O 2-7 %
Fe₂O₃ 3-8 %
ZnO 0,4-3 %
F₂ 1-5 %
TiO₂ 0,1-3 %

2. Composition de fibres minérales selon la revendication 1, **caractérisée en ce qu'**elle est effilochable par un procédé de centrifugation et soufflage.

3. Composition de fibres minérales selon la revendication 1 ou 2, **caractérisée en ce qu'**elle contient en supplément au moins un des composants suivants, indiqué en pourcentage de la masse :
MnO 0,1-1 %
SO₃ 0,1-0,5 %
BaO 0-0,2 %
Cr₂O₃ 0-0, 1 %.

4. Composition de fibres minérales selon une des revendications 1 à 3, **caractérisée par** la composition chimique suivante en pourcentage de la masse :
SiO₂ 39-42 %
Al₂O₃ 19-22 %
CaO 10-12 %
MgO 3-5 %
Na₂0 8-11 %
K₂O 3-6 %
Fe₂O₃ 4-6 %
ZnO 0,4-2 %
F₂ 2-4 %
TiO₂ 0,5-1 %
MnO 0,1-0,4 %
SO₃ 0,2-0,4 %
BaO 0-0,1 %

5. Composition de fibres minérales selon une des revendications 1 à 4, **caractérisée en ce que** la part additionnée de SiO₂ et Al₂O₃ représente 56 à 65 % de la masse.

6. Composition de fibres minérales selon une des revendications 1 à 5, **caractérisée en ce que** la part d'oxyde alcalin R₂O, en particulier de Na₂O et K₂O, représente 11 à 14 % de la masse.

7. Composition de fibres minérales selon une des revendications 1 à 6, **caractérisée en ce que** la part d'oxyde alcalin terreux RO, c'est-à-dire de CaO et MgO, représente 12 à 19 % de la masse.

8. Composition de fibres minérales selon une des revendications 1 à 7, **caractérisée en ce que** la part de ZnO et F₂ représente 2 à 7 % de la masse.

9. Composition de fibres minérales selon une des revendications 1 à 7, **caractérisée en ce que** la somme des parts de Fe₂O₃, MgO et TiO₂ représente au plus 9 % de la masse.

10. Composition de fibres minérales selon une des revendications 1 à 9, **caractérisée en ce que** les fibres minérales fabriquées à partir de celle-ci présentent une vitesse de dissolution d'au moins 30 ng/cm² par heure avec une valeur de pH de 4,5.

11. Composition de fibres minérales selon une des revendications 1 à 9, **caractérisée en ce que** les fibres minérales fabriquées à partir de celle-ci présentent une vitesse de dissolution d'au moins 30 ng/cm² par heure avec une valeur de pH de 7,5.

12. Composition de fibres minérales selon une des revendications 1 à 9, **caractérisée en ce que** le quotient de Al₂O₃ *I* AL₂O₃ + SiO₂ est supérieur à 0,35.

13. Composition de fibres minérales selon une des revendications 1 à 9, **caractérisée en ce que** les fibres minérales fabriquées présentent une période de demi-valeur de moins de 40 jours dans le test intra-boîte in vivo.

14. Composition de fibres minérales selon une des revendications 1 à 13, **caractérisée en ce que** la différence de température entre la viscosité de la coulée à 10² d Pas et la température du liquide est d'au moins 100° et de préférence de plus de 120°.

15. Composition de fibres minérales selon une des revendications 1 à 14, **caractérisée en ce que** les fibres minérales présentent une résistance thermique suivant la DIN 4102, partie 17, d'au moins 1000 °C.

16. Composition de fibres minérales selon une des revendications précédentes, **caractérisée en ce que** la température limite d'utilisation suivant ISO 8142, DIN EN 14706 et DIN EN 14707 s'élève à au moins 600 °C.

17. Composition de fibres minérales selon une des revendications précédentes, **caractérisée en ce qu'**au moins 95 % en masse des matières premières pour les fibres sont composées de matériaux bruts existant naturellement ainsi que de matériaux recyclés par chevilles.

18. Composition de fibres minérales selon une des revendications précédentes, **caractérisé par** les composantes chimiques indiquées ci-après en pourcentage de la masse :
SiO₂ 41-42 %
Al₂O₃ 21-22 %
CaO 11-12 %
MgO 4-5 %
Na₂O 8-9 %
K₂O 4-5 %
Fe₂O³ 5-6 %
ZnO 0,5-1 %
F₂ 1-2 %
TiO₂ 0,5-1 %
SO₃ 0,1-0,2 %
MnO 0-0,2 %
BaO 0-0,1 %
Cr₂O₃ 0-0,1 %
